Europäisches Patentamt

European Patent Office

Office européen des brevets

(11) Veröffentlichungsnummer : **0 161 402**
**B1**

(12) **EUROPÄISCHE PATENTSCHRIFT**

(45) Veröffentlichungstag der Patentschrift :
09.09.87

(51) Int. Cl.⁴ : **C 09 K 11/67, C 09 K 11/64**

(21) Anmeldenummer : **85102287.1**

(22) Anmeldetag : **01.03.85**

(54) Leuchtstoffe auf der Basis von mit Mangan aktiviertem Kadmiumborat und Verfahren zu ihrer Herstellung.

(30) Priorität : **12.05.84 DE 3417626**

(43) Veröffentlichungstag der Anmeldung :
**21.11.85 Patentblatt 85/47**

(45) Bekanntmachung des Hinweises auf die Patenterteilung : **09.09.87 Patentblatt 87/37**

(84) Benannte Vertragsstaaten :
**AT BE CH DE FR GB IT LI NL SE**

(56) Entgegenhaltungen :
**BE-A-    430 999**
**NL-A-     96 980**

(73) Patentinhaber : **Degussa Aktiengesellschaft**
**Weissfrauenstrasse 9**
**D-6000 Frankfurt am Main 1 (DE)**

(72) Erfinder : **Kiss, Akos, Dr. Dipl.-Chem.**
**Keplerstrasse 69**
**D-8750 Aschaffenburg (DE)**
Erfinder : **Kleinschmit, Peter, Dr. Dipl.-Chem.**
**Wildaustrasse 19**
**D-6450 Hanau (DE)**
Erfinder : **Völker, Werner, Dr. Dipl.-Chem.**
**Auf dem Niederberg 45**
**D-6368 Bad Vilbel (DE)**
Erfinder : **Halbritter, Günter, Dipl.-Ing.**
**Rhönstrasse 6**
**D-8752 Schöllkrippen (DE)**

**Beschreibung**

Die Erfindung betrifft Leuchtstoffe auf der Basis von mit Mangan aktiviertem Kadmiumborat, sowie ein Verfahren zu deren Herstellung.

Leuchtstoffe sind feste Substanzen, die befähigt sind, nach Energieabsorption (z. B. Tageslicht, Ultraviolett-, Röntgen- oder Korpuskularstrahlen) Licht auszusenden, das im allgemeinen eine größere Wellenlänge aufweist als die absorbierte Strahlung besitzt. Die Lichtausstrahlung findet während der Erregung selbst statt und in verschieden langen Zeiträumen danach, die von Millisekunden bis Stunden reichen können.

Leuchtstoffe finden verbreitet Anwendung, wie beispielsweise in der Beleuchtungstechnik zur Erhöhung der Energieausbeute bei Quecksilberlampen, in der Röntgendiagnostik oder bei der Beschichtung von Fernsehröhren zur Sichtbarmachung des modulierten Elektronenstrahls. Außerdem werden sie als Überzüge für keramische Produkte verwendet, insbesondere in Glasuren für keramische Fliesen.

Leuchtfähig sind nur wenige anorganische Verbindungen. Im allgemeinen wird die Leuchtfähigkeit erst durch eine Aktivierung erworben, zum Beispiel durch Einbau kleiner Mengen an kristallgitterfremden Ionen (Aktivatoren) in das Kristallgitter (Wirtsgitter) der anorganischen Verbindung (Grundmaterial). Bei den aktivatorhaltigen Leuchtstoffen handelt es sich daher um kristallisierte Verbindungen, in denen einige Kationen des Grundmaterials durch fremde Kationen ersetzt sind. Die eingebauten Kationen mit der sie umgebenden Schar von Anionen hat man dabei als sogenannte Leuchtzentren aufzufassen, die für die charakteristischen Absorptionen und Emissionen verantwortlich sind.

Von Bedeutung als Grundmaterial für die Leuchtstoffe sind vor allem Salze der Erdalkalien und ihrer Nebengruppenelemente Zink und Kadmium, wie Phosphate, Silikate, Borate, Aluminate und Oxide. Als Aktivatoren benutzt man vorzugsweise die seltenen Erden und Schwermetalle, wie Mangan, Blei, Zinn oder Antimon.

Die Leuchtstoffe müssen im allgemeinen sehr rein sein und ein möglichst störstellenfreies Kristallgitter besitzen, da Verunreinigungen in den Ausgangsmaterialien als Löschzentren wirken und die Leuchtintensität der Leuchtstoffe herabsetzen. Ähnlich wirken Gitterdefekte. Beim mechanischen Zerkleinern der Verbindungen wird die Leuchtfähigkeit beeinträchtigt und kann im Extremfall völlig zerstört werden.

Die bisher bekannten Leuchtstoffe haben den weiteren Nachteil, daß sie zum großen Teil nicht temperaturstabil sind und sich in vielen Glasfritten auflösen. Sie sind daher als Farbkörper in Glasuren für keramische Fliesen nicht geeignet, die Brenntemperaturen von über 700 bis 800 °C erfordern.

Leuchtstoffe auf der Basis von mit Mangan aktivierten Kadmiumboraten sind bekannt. Kadmiumoxid ($CdO$) bildet mit Boroxid ($B_2O_3$) eine größere Zahl von Kadmiumboraten, die bei Mangan-Aktivierung je nach ihrer Zusammensetzung grün bis rot emittierende Leuchtstoffe ergeben. Praktische Verwendung hat nur das ($2CdO \cdot B_2O_3$ : Mn) gefunden, das bei Anregung mit der Quecksilberstrahlung von 254 nm im orangeroten Bereich bei 626 nm eine Emissionsbande besitzt. Der Leuchtstoff lässt sich aus den sehr reinen Ausgangsverbindungen $CdO$ bzw. $CdCO_3$, $H_3BO_3$ und $MnCO_3$ durch Glühen bei 800 °C herstellen, ist jedoch sehr empfindlich gegen Verunreinigungen, mechanisches Zerkleinern, gegen hohe Temperaturen und gegen Glasflüsse, wie sie beim Glasieren von keramischen Produkten auftreten.

Es war daher Aufgabe der vorliegenden Erfindung, Leuchtstoffe auf der Basis von mit Mangan aktiviertem Kadmiumborat zu entwickeln, die bei praktisch gleicher Leuchtintensität im roten Bereich aus handelsüblichen Ausgangsverbindungen mit geringem Reinheitsgrad hergestellt werden können, die mahlunempfindlich, temperaturstabil und chemisch beständiger gegen keramische Glasuren sind als die bekannten Leuchtstoffe. Außerdem sollte ein Verfahren zur Herstellung dieser Leuchtstoffe gefunden werden.

Diese Aufgabe wurde erfindungsgemäß dadurch gelöst, daß sie neben

1 bis 80 Mol% Kadmiumoxid ($CdO$)
1 bis 50 Mol% Boroxid ($B_2O_3$)
und 0,2 bis 1,3 Mol% Manganoxid ($MnO$)
noch 0 bis 10 Mol% eines Oxids aus der Reihe Kaliumoxid, Kalziumoxid, Magnesiumoxid, Bariumoxid, Strontiumoxid, Nickeloxid, Kobaltoxid, Chromoxid, Titanoxid und/oder Zirkoniumoxid
und

0,1 bis 22,5 Mol% Natriumoxid ($Na_2O$)
0,3 bis 23,8 Mol% Aluminiumoxid ($Al_2O_3$)
0,5 bis 47,5 Mol% Siliziumoxid ($SiO_2$)
in Form einer Zeolithphase enthalten.

Vorzugsweise enthalten diese Leuchtstoffe neben

10 bis 60 Mol% kadmiumoxid ($CdO$)
10 bis 45 Mol% Boroxid ($B_2O_3$)
und 0,3 bis 1 Mol% Manganoxid ($MnO$)
noch 0 bis 10 Mol% eines weiteren Oxids aus der Reihe $K_2O$, $CaO$, $MgO$, $BaO$, $SrO$, $NiO$, $CoO$, $Cr_2O_3$, $TiO_2$ und/oder $ZrO_2$
und

1,5 bis 19,7 Mol% Natriumoxid (Na$_2$O)
2,5 bis 20 Mol% Aluminiumoxid (Al$_2$O$_3$)
5 bis 40 Mol% Siliziumoxid (SiO$_2$)
in Form einer Zeolithphase.

Diese Leuchtstoffe lassen sich aus Ausgangskomponenten in nichthochreiner Qualität herstellen, sind weitgehend mahlunempfindlich und widerstandsfähig gegen die meisen keramischen Glasuren.

Besonders unempfindlich und intensive Leuchtstoffe erhält man im folgenden Bereich :

24 bis 28 Mol% Kadmiumoxid (CdO)
25 bis 29 Mol% Boroxid (B$_2$O$_3$)
0,4 bis 0,8 Mol% Manganoxid (MnO)
0 bis 10 Mol% eines weiteren Oxids (K$_2$O, CaO, MgO, BaO, SrO, NiO, CoO, Cr$_2$O$_3$, TiO$_2$, ZrO$_2$)
9,4 bis 12,7 Mol% Natriumoxid (Na$_2$O)
10,2 bis 13,1 Mol% Aluminiumoxid (Al$_2$O$_3$)
20,4 bis 26,2 Mol% Siliziumoxid (SiO$_2$),
wobei die Bestandteile Na$_2$O, Al$_2$O$_3$ und SiO$_2$ in Form einer Zeolithphase vorliegen müssen.

Als weiteres Oxid setzt man vorzugsweise 2 bis 10 Mol% Kalziumoxid, Magnesiumoxid oder Zirkoniumoxid zu.

Die erfindungsgemäßen Leuchtstoffe besitzen ein Anregungsmaximum bei 290 nm und ein Emissionsmaximum bei 655 nm ($\Delta\lambda$ = 2 nm) im roten Bereich mit einer Halbwertsbreite von rund 22 nm. Der Zusatz der weiteren Oxide verschiebt die Wellenlänge des emittierten Lichts in geringem Umfang : CaO und MgO bewirken z. B. eine Verschiebung in den dunkelroten Bereich, ZrO$_2$ in den rosa Bereich.

In diesen Leuchtstoffen ist röntgenographisch neben den Reflexen des Kadmiumborats eine Zeolithphase nachweisbar. Der Einsatz eines Zeoliths, vorzugsweise vom Typ A, als Leuchtstoffbestandteil hat den weiteren Vorteil, daß der Aktivator Mangan mit Hilfe des Zeolithen in seiner Funktion als Ionenaustauscher zugeführt und dadurch sehr gleichmäßig im Leuchtstoff verteilt werden kann.

Zur Herstellung der erfindungsgemäßen Leuchtstoffe werden handelsübliche Ausgangsprodukte zur Erzeugung von Kadmiumborat in Oxidform oder in Form von Verbindungen, die beim Erhitzen in Oxid übergehen, wie beispielsweise Kadmiumoxid oder -karbonat und Borsäure, in den entsprechenden Molverhältnissen zusammen mit einem manganbeladenen Zeolithen, vorzugsweise Typ A, und gegebenenfalls einem Oxid aus der Reihe Kaliumoxid, Kalziumoxid, Magnesiumoxid, Bariumoxid, Strontiumoxid, Nickeloxid, Kobaltoxid, Chromoxid, Titanoxid und Zirkoniumoxid im zerkleinerten Zustand gut gemischt, dann leicht gepresst und in einer Festkörperreaktion bei 650 bis 900 °C 0,5 bis 6 Stunden an der Luft geglüht. Anschließend kann das Glühprodukt durch Mahlen zerkleinert werden, ohne daß die Leuchtintensität dadurch vermindert wird.

Vorzugsweise wird bei 700 bis 800 °C während 1 bis 4 Stunden geglüht.

Zur Herstellung des manganbeladenen Zeolithen werden beispielsweise 200 g eines Zeoliths (HAB 40 Degussa) mit 5,9 g Manganchlorid (MnCl$_2 \cdot$ 2H$_2$O) in 1 Liter Wasser bei 80 °C etwa 4 Stunden gerührt, abfiltriert, gewaschen und bei 120 °C getrocknet.

Beispielsweise wurden 500 g Kadmiumoxid (CdO), 500 g Borsäure (H$_3$BO$_3$) und 500 g eines manganbeladenen Zeoliths (Typ A) zerkleinert und 15 Minuten in einem Mischer trockengemischt, dann in einem Keramiktiegel durch Eindrücken leicht verdichtet und in einen Kammerofen gegeben, der mit 400 °C pro Stunde aufgeheizt wurde. Das Glühen erfolgte bei 760 °C im Zeitraum von 2 Stunden. Der so hergestellte Leuchtstoff verliert beim Zerkleinern nicht wahrnehmbar an Leuchtkraft, ist temperaturstabil und widerstandsfähig gegen die meisten keramischen Glasuren.

Folgende Leuchtstoffe wurden beispielsweise nach diesem Verfahren hergestellt :

| CdO [Mol%] | B$_2$O$_3$ [Mol%] | MnO [Mol%] | Na$_2$O [Mol%] | Al$_2$O$_3$ [Mol%] | SiO$_2$ [Mol%] | Me$_x$O$_y$ [Mol%] |
|---|---|---|---|---|---|---|
| 26,0 | 27,0 | 0,6 | 10,9 | 11,5 | 24,0 | – |
| 78,2 | 19,4 | 0,3 | 0,3 | 0,6 | 1,2 | |
| 60,1 | 28,3 | 0,7 | 2,2 | 2,9 | 5,8 | |
| 19,5 | 48,1 | 1,1 | 7,0 | 8,1 | 16,2 | |
| 1,3 | 43,9 | 1,2 | 12,5 | 13,7 | 27,4 | |
| 24,9 | 1,5 | 1,0 | 17,4 | 18,4 | 36,8 | |
| 33,9 | 32,1 | 0,8 | 6,9 | 7,7 | 15,4 | 3,2 CaO |
| 29,2 | 29,6 | 0,9 | 7,3 | 8,2 | 16,4 | 8,4 CaO |
| 26,4 | 33,8 | 1,0 | 7,0 | 8,0 | 16,0 | 7,8 MgO |
| 26,3 | 28,5 | 1,2 | 7,8 | 9,0 | 18,0 | 9,2 ZrO$_2$ |
| 26,1 | 28,4 | 0,7 | 10,1 | 10,8 | 21,6 | 2,3 ZrO$_2$ |

(Fortsetzung)

| CdO [Mol%] | $B_2O_3$ [Mol%] | MnO [Mol%] | $Na_2O$ [Mol%] | $Al_2O_3$ [Mol%] | $SiO_2$ [Mol%] | $Me_xO_y$ [Mol%] |
|---|---|---|---|---|---|---|
| 24,8 | 25,3 | 0,8 | 12,8 | 12,1 | 24,2 | |
| 23,8 | 25,2 | 0,8 | 17,8 | 10,8 | 21,6 | |

## Patentansprüche

1. Leuchtstoffe auf der Basis von mit Mangan aktiviertem Kadmiumborat, dadurch gekennzeichnet, daß sie neben

1 bis 80 Mol% Kadmiumoxid (CdO)
1 bis 50 Mol% Boroxid ($B_2O_3$)
und 0,2 bis 1,3 Mol% Manganoxid (MnO)
noch 0 bis 10 Mol% eines Oxids aus der Reihe Kalium-, Kalzium-, Magnesium-, Barium-, Strontium-, Nickel-, Kobalt-, Chrom-, Titan-, und/oder Zirkoniumoxid
und
0,1 bis 22,5 Mol% Natriumoxid ($Na_2O$)
0,3 bis 23,8 Mol% Aluminiumoxid ($Al_2O_3$)
0,5 bis 47,5 Mol% Siliziumoxid ($SiO_2$)
in Form einer Zeolithphase enthalten.

2. Leuchtstoffe nach Anspruch 1, dadurch gekennzeichnet, daß sie neben

10 bis 60 Mol% Kadmiumoxid (CdO)
10 bis 45 Mol% Boroxid ($B_2O_3$)
und 0,3 bis 1,0 Mol% Manganoxid (MnO)
noch 0 bis 10 Mol% eines Oxids aus der Reihe Kalium-, Kalzium-, Magnesium-, Barium-, Strontium-, Nickel-, Kobalt-, Chrom-, Titan-, und/oder Zirkoniumoxid
und
1,5 bis 19,7 Mol% Natriumoxid ($Na_2O$)
2,5 bis 20 Mol% Aluminiumoxid ($Al_2O_3$)
5 bis 40 Mol% Siliziumoxid ($SiO_2$)
in Form einer Zeolithphase enthalten.

3. Leuchtstoffe nach Anspruch 1 und 2, dadurch gekennzeichnet, daß sie neben

24 bis 28 Mol% Kadmiumoxid (CdO)
25 bis 29 Mol% Boroxid ($B_2O_3$)
und 0,4 bis 0,8 Mol% Manganoxid (MnO)
noch 0 bis 10 Mol% eines weiteren Oxids ($K_2O$, CaO, MgO, BaO, SrO, NiO, CoO, $Cr_2O_3$, $TiO_2$, $ZrO_2$)
und
9,4 bis 12,7 Mol% Natriumoxid ($Na_2O$)
10,2 bis 13,1 Mol% Aluminiumoxid ($Al_2O_3$)
20,4 bis 26,2 Mol% Siliziumoxid ($SiO_2$)
in Form einer Zeolithphase enthalten.

4. Leuchtstoffe nach Anspruch 1 bis 3, dadurch gekennzeichnet, daß sie 2 bis 10 Mol% Kalziumoxid, Magnesiumoxid oder Zirkoniumoxid enthalten.

5. Verfahren zur Herstellung von Leuchtstoffen gemäß Anspruch 1 bis 3, dadurch gekennzeichnet, daß die Ausgangskomponenten zur Herstellung von Kadmiumborat in Oxidform oder in Form einer Verbindung, die beim Erhitzen in Oxid übergeht, in den entsprechenden Molverhältnissen mit einem manganbeladenen Zeolithen und gegebenenfalls mit einem Oxid aus der Reihe Kalium-, Kalzium-, Magnesium-, Barium-, Strontium-, Nickel-, Kobalt-, Chrom-, Titan- oder Zirkoniumoxid in zerkleinerten Zustand gemischt, dann leicht gepresst und in einer Festkörperreaktion bei 650 bis 900 °C 0,5 bis 6 Stunden an der Luft geglüht werden.

6. Verfahren zur Herstellung von Leuchtstoffen nach Anspruch 5, dadurch gekennzeichnet, daß bei 700 bis 800 °C während 1 bis 4 Stunden geglüht wird.

## Claims

1. Luminous substances based on cadmium borate activated with manganese, characterised in that they contain in addition to

1 to 80 mol % of cadmium oxide (CdO)

1 to 50 mol % of boron oxide ($B_2O_3$)

and 0.2 to 1.3 mol % of manganese oxide (MnO)

a further 0 to 10 mol % of an oxide from the series including potassium, calcium, magnesium, barium, strontium, nickel, cobalt, chromium, titanium and/or zirconium oxide

and

0.1 to 22.5 mol % of sodium oxide ($Na_2O$)

0.3 to 23.8 mol % of aluminium ($Al_2O_3$)

0.5 to 47.5 mol % of silicon oxide ($SiO_2$)

in the form of a zeolite phase.

2. Luminous substances according to claim 1, characterised in that they contain, in addition to

10 to 60 mol % of cadmium oxide (CdO)

10 to 45 mol % of boron oxide ($B_2O_3$)

and 0.3 to 1.0 mol % of manganese oxide (MnO)

a further 0 to 10 mol % of an oxide from the series comprising potassium, calcium, magnesium, barium, strontium, nickel, cobalt, chromium, titanium and/or zirconium oxide

and

1.5 to 19.7 mol % of sodium oxide ($Na_2O$)

2.5 to 20 mol % of aluminium oxide ($Al_2O_3$)

5 to 40 mol % of silicon oxide ($SiO_2$)

in the form of a zeolite phase.

3. Luminous substances according to claims 1 and 2, characterised in that they contain, in addition to

24 to 28 mol % of cadmium oxide (CdO)

25 to 29 mol % of boron oxide ($B_2O_3$)

and 0.4 to 0.8 mol % of manganese oxide (MnO)

a further 0 to 10 mol % of a further oxide ($K_2O$, CaO, MgO, BaO, SrO, NiO, CoO, $Cr_2O_3$, $TiO_2$ $ZrO_2$)

and

9.4 to 12.7 mol % of sodium oxide ($Na_2O$)

10.2 to 13.1 mol % of aluminium oxide ($Al_2O_3$)

20.4 to 26.2 mol % of silicon oxide ($SiO_2$)

in the form of a zeolite phase.

4. Luminous substances according to claims 1 to 3, characterised in that they contain from 2 to 10 mol% of calcium oxide, magnesium oxide or zirconium oxide.

5. A process for producing luminous substances according to claims 1 to 3, characterised in that the starting components for the production of cadmium borate are mixed in oxide form or in the form of a compound which passes into oxide on heating, in the corresponding molar ratios with a manganese-charged zeolite and optionally with an oxide from the series comprising potassium, calcium, magnesium, barium, strontium, nickel, cobalt, chromium, titanium or zirconium oxide in a comminuted state, then lightly pressed and caused to glow in a solid state reaction at 650 to 900 °C for 0.5 to 6 hours in air.

6. A process for producing luminous substances according to claim 5, characterised in that the mixture is caused to glow for 1 to 4 hours at from 700 to 800 °C.

**Revendications**

1. Substances luminescentes à base de borate de cadmium activé avec du manganèse, caractérisées en ce qu'elles contiennent en plus de

1 à 80 mol % d'oxyde de cadmium (CdO)

1 à 50 mol % d'oxyde de bore ($B_2O_3$)

et 0,2 à 1,2 mol % d'oxyde de manganèse (MnO) encore, 0 à 10 mol % d'un oxyde de la série des oxydes de potassium, calcium, magnésium, baryum, strontium, nickel, cobalt, chrome, titane et/ou zirconium

et

0,1 à 22,5 mol % d'oxyde de sodium ($Na_2O$)

0,3 à 23,8 mol % d'oxyde d'aluminium ($Al_2O_3$)

0,5 à 47,5 mol % d'oxyde de silicium ($SiO_2$)

sous la forme d'une phase zéolithe.

2. Substances luminescentes suivant la revendication 1, caractérisées en ce qu'elles contiennent en plus de

10 à 60 mol % d'oxyde de cadmium (CdO)

10 à 45 mol % d'oxyde de manganèse (MnO)

et 0,3 à 1 mol % d'oxyde de manganèse (MnO) encore 0 à 10 mol % d'un oxyde de la série des oxydes de potassium, calcium, magnésium, baryum, strontium, nickel, cobalt, chrome, titane et/ou zirconium

et

1,5 à 19,7 mol % d'oxyde de sodium ($Na_2O$)

2,5 à 20 mol % d'oxyde d'aluminium ($Al_2O_3$)

5 à 40 mol % d'oxyde de silicium ($SiO_2$)

sous la forme d'une phase zéolithe.

3) Substances luminescentes suivant les revendications 1 et 2, caractérisées en ce qu'elles contiennent en plus de

24 à 28 mol % d'oxyde de cadmium (CdO)

25 à 29 mol % d'oxyde de bore ($B_2O_3$)

et 0,4 à 0,8 mol % d'oxyde de manganèse (MnO) encore 0 à 10 mol % d'un autre oxyde ($K_2O$, CaO, MgO, BaO, SrO, NiO, CoO, $Cr_2O_3$, $TiO_2$, $ZrO_2$

10,2 à 13,1 mol % d'oxyde d'aluminium ($Al_2O_3$)

20,4 à 26,2 mol % d'oxyde de silicium ($SiO_2$)

sous la forme d'une phase zéolithe.

4) Substances luminescentes suivant les revendications 1 à 3, caractérisées en ce qu'elles contiennent 2 à 10 mol % d'oxyde de calcium, magnésium, ou zirconium.

5) Procédé pour la fabrication de substances luminescentes suivant les revendications 1 à 3, caractérisé en ce que les composés de départ, destinés à la fabrication du borate de cadmium, sont mélangés à l'état finement broyés, sous la forme d'oxyde, ou sous la forme d'un composé qui se transforme en oxyde par chauffage, dans les rapports moléculaires appropriés, avec une zéolithe chargée de manganèse, et éventuellement avec un oxyde de la série des oxydes de potassium, calcium, magnésium, baryum, strontium, nickel, cobalt, chrome, titane et/ou zirconium, puis sont légèrement pressés, et calcinés dans une réaction entre corps solides, à l'air, de 650 à 900 °C, pendant 0,5 à 6 heures.

6) Procédé pour la fabrication de substances luminescentes suivant la revendication 5, caractérisé en ce que la calcination s'opère de 700 à 800 °C, pendant 1 à 4 heures.